Europäisches Patentamt

(19) European Patent Office

Office européen des brevets

(11) Publication number: **0 304 105**
**B1**

## (12) EUROPEAN PATENT SPECIFICATION

(45) Date of publication of the patent specification:
14.11.90

(51) Int. Cl.⁵: **B01J 35/02**

(21) Application number: 88201572.0

(22) Date of filing: 20.07.88

(54) Process and apparatus for fixing materials in a fluid stream.

(30) Priority: **30.07.87 BE 8700850**

(43) Date of publication of application:
**22.02.89 Bulletin 89/8**

(45) Publication of the grant of the patent:
**14.11.90 Bulletin 90/46**

(84) Designated Contracting States:
**AT CH DE ES FR GB GR IT LI LU NL SE**

(56) References cited:
EP-A- 0 228 885
FR-A- 2 086 034
FR-A-10 873 80
US-A-40 274 76
US-A-42 018 27

(73) Proprietor: **SCHELDE-DELTA, b.v.b.a.,**
**Arenbergstraat 23, B-2000 Antwerpen(BE)**

(72) Inventor: **Martens, Laurent, Gustaaf Papestraat 74,**
**B-9300 Aalst(BE)**

(74) Representative: **Donné, Eddy, Bureau M.F.J. Bockstael**
**nv Arenbergstraat 13, B-2000 Antwerpen(BE)**

## Description

This invention relates to a mode of operation to immobilize components in a fluid flow during chemical processes, in other words a mode of operation to retain components, particularly components in a solid state of matter, in a defined position in a fluid flow. This mode of operation is intended to be applied very universally. First of all one thinks about it in applications with heterogeneous catalysis, where the catalyst forms the aforementioned component to be immobilized, and where these components can be either of an non-organic, organic, biological or of a biochemical nature.

Already different modes of operation are known from catalysis techniques to immobilize solid components in a fluid flow. As an example it is known to place a fluid permeable membrane in the fluid flow, on which catalyst particles are being retained. This technique shows however a.o. the disadvantage that with the catalyst's piling effect the effective surface with which the catalyst is in contact with the fluid to react is being reduced.

According to another known mode of operation components, mainly catalysts, are being immobilized in a fluid flow by firmly retaining these chemically or by other techniques, such as impregnation, wit a porous membrane. This mode of operation has however the disadvantage that particular preparatory techniques are required and that the catalyst simply cannot be regenerated after eventual exhaustion or pollution, as releasing it from porous structures requires special techniques.

Also to be noted is that it is also known with catalyst reaction to install the catalyst freely in the fluid, to affect the reaction in the fluid in this way, either by acceleration or deceleration. This mode of operation has however the disadvantage that the free movement of the catalyst particles have an erosion effect on these particles themselves.

The purpose of the present invention is to provide for a mode of operation to immobilize components in a fluid flow during chemical processes, whereby, with its application to catalyst reactions, the aforementioned disadvantages are being systematically excluded.

For this purpose this mode of operation consists mainly in providing for a unit, in the fluid flow, of porous and/or permeable material, of which the degree of fineness of porosity and/or of its structure increases in the direction of flow, and to allow intrusion of solid components in the unit where the relationship between material porosity and/or permeability of the aforementioned unit and the magnitude of the components is chosen in such way that the components immobilize due to the increasing degree of fineness of porosity and/or of the structure in the unit.

The present invention also pertains to the devices which apply the mode of operation. It is clear that first of all reactors are meant here to carry out catalyst reactions. In a particular embodiment of these devices they are suitable as well to provide for the sterilization of the flowing fluid.

In order to better show the characteristics of this invention, some preferred embodiments of it are described below, as examples without any restrictive character, with reference to the enclosed drawings, in which :

figure 1 represents a device according to the invention where use is made of a porous layer of material with changing porosity gradient operating as a membrane ;

figure 2 represents a device according to the invention where use is made of two a porous layers of material functioning as a membrane ;

figure 3 represents a device according to the invention where use is made of a supporting layer ;

figure 4 represents a device according to the invention where a serial connection of the immobilizing effect is provided for ;

figure 5 represents a variant of the device as shown in figure 4 ;

figure 6 represents another particular embodiment of the invention.

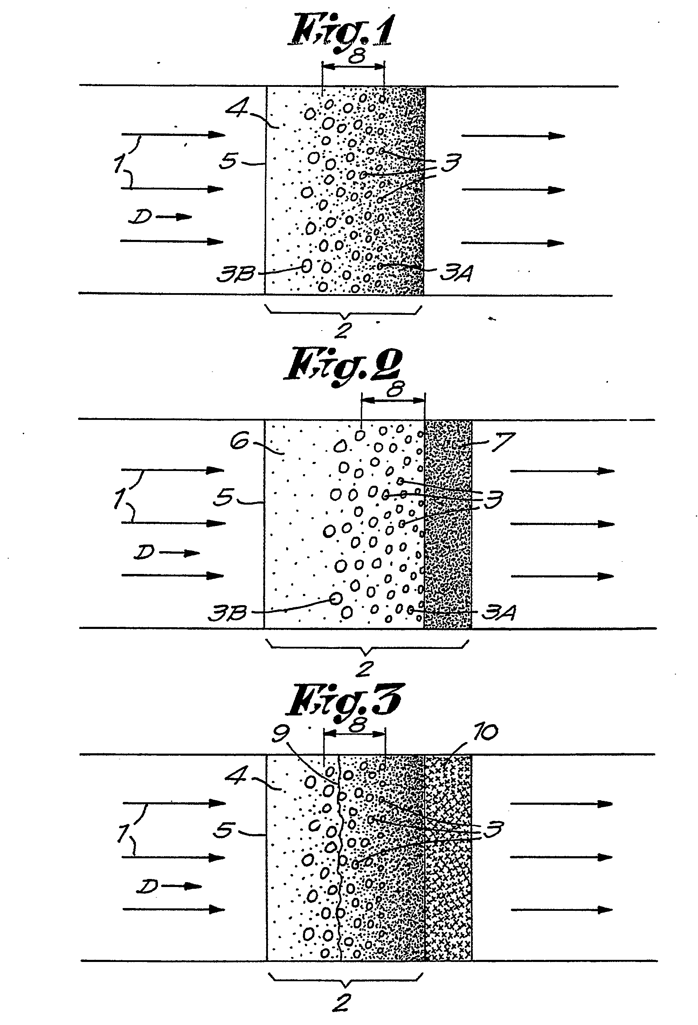

As shown in figures 1 and 2 the devices which apply the mode of operation according to the invention mainly consist of a unit 2 made of porous material to be put in the fluid flow 1, whereof the porosity degree of fineness increases in the direction of flow D ; and the immobilized components 3 in unit 2, where the mutual relationship between the porosity degree and the magnitude of the components 3 is such that these components 3 by the increasing fineness of the material of unit 2 remain immobilized in latter.

According to figure 1 the aforementioned is achieved by using a unit 2 consisting mainly of the porous layer of material operating as a membrane 4 with a porosity gradient according to the direction of flow D, where the porosity degree of fineness gradually increases. This is schematically represented in figure 1 where the layer 4 with an increasing density in accordance with the direction of flow D is dotted. By a correct choice of, on the one hand, porosity, and on the other hand, the magnitude of the components 3, these components 3 will at inlet side 5 by the influence of the fluid flow 1 indeed be able to penetrate into the porous layer of material 4 , but through the increasing fineness in porosity be blocked in this layer 4. If components 3 are not of the same magnitude the smallest components 3A will of course penetrate further in the layer 4 than the largest components 3B.

It is clear that with the aforementioned degree of fineness of the material a gradual porosity transition is not exclusively meant as it is the case in figure 1. In figure 2 a unit 2 is therefore used consisting of the combination of two layers of material 6 and 7 completely connecting with each other as a physical entity and functioning as a membrane ; both in such way that components 3 can penetrate in the porous layer of material 6, but be retained by the finer porous layer 7.

It is clear that next to the fact that unit 2 becomes impermeable at a particular location for components 3, the presence of the fluid flow 1 is important to achieve the immobilization of components 3. Due to the pressure of the fluid flow 1 these components 3 are being pushed forward though into unit 2.

The introduction of components 3 in unit 2, more particularly respectively in the layers of material 4 and 6 can occur simply by adding components 3 ahead of the device in the fluid flow 1, whereby these will penetrate on their own into unit 2 until they affix themselves.

As according to the invention components 3 are being immobilized in a porous carrier, formed by respectively the layers of material 4 and 6, a certain spreading of components 3 develops, where adverse piling effects are being excluded. In other words this means that with the good spreading of components 3 an optimum contact of their surfaces with the fluid flow 1 is created. This way of immobilizing offers the advantage as well that through the presence of the porous carrier a laminar flow is achieved where the erosion effect on components 3 is being excluded.

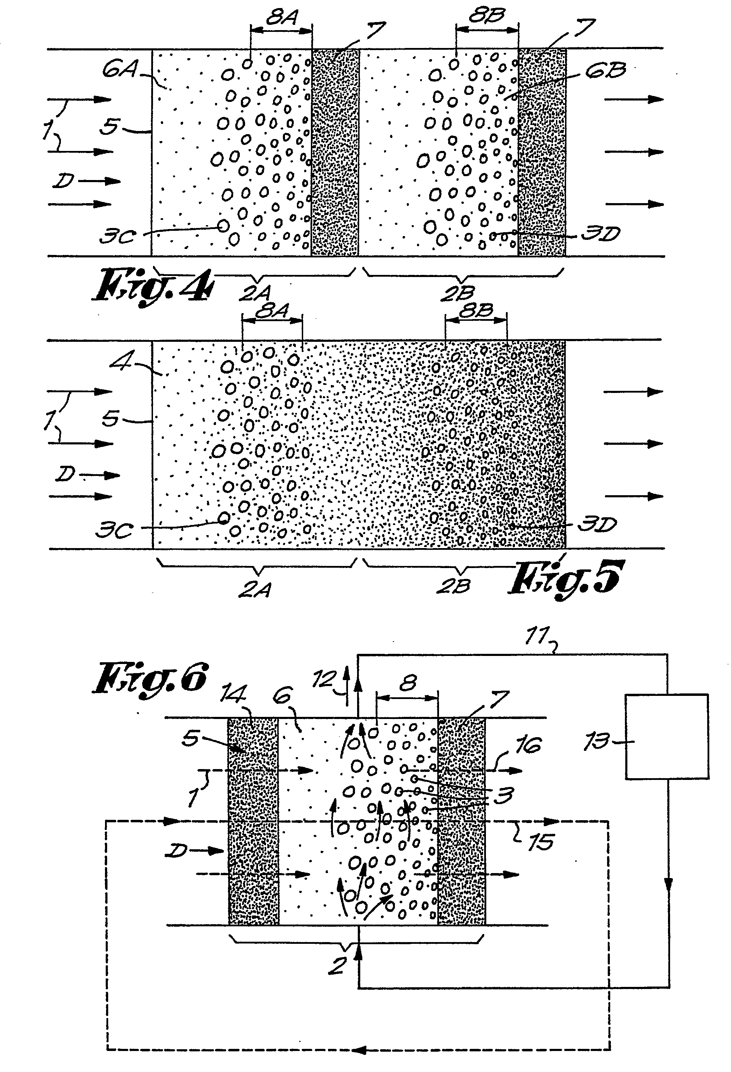

It is clear that the fluid has to be put under a certain pressure to flow through the porous layers 4 or 6. In unit 2, and especially in area 8 where the concentration of components 3 is the most important a pressure drop will occur. In this case, as indicated schematically in figure 3 due to an overpressure a separation 9 in unit 2 could occur in particular cases, depending on the strength of the component's carrier 3. In order to avoid this the device, as shown in figure 3, will preferably be equipped with a supporting layer 10, which is sufficiently porous to allow for a good passage of fluid flow 1, and against which the remaining layers of material, be it layer of material 4, or be it layers 6 and 7 are being placed. The supporting layer 10 consists of such material or possesses such thickness that no cracks or crevices can occur in the other layers.

It is obvious that the different layers 4, 6, 7 and 10 can consist of different kinds of materials, which are physically integrated where required, provided that, as only prerequisites, they must be porous in such way to allow for the passage of the fluid flow 1, that they must be able to endure the concerned chemical products in fluid flow 1 and/or of components 3 and that they must possess an adequate porousity in function of the components 3 to be immobilized. In the case that device according to this inventions is being used to immobilize a catalyst a membrane based on siliciumcarbide, preferably exclusively consisting of porous siliciumcarbide, can be installed in many cases ahead of layers 4, 6 and 10. Other important materials for this purpose are for instance aluminosilicates and boroncarbide. The layer of material 7 consists preferably of aluminiumoxyde.

It is clear that the device according to the invention can be arranged in more than one manner. Besides the aforementioned use of one unit 2 it is obvious that more units 2 can be connected in series or in parallel. An arrangement of such device is also shown in figure 4 where two units 2A and 2B a connected in series according to figure 2. Each layer of material 6A and 6B acts in this case as a carrier for components, respectively 3C and 3D, where the same layers of material are applied or not.

The series construction of two units can also be made as shown in figure 5, where these two units 2A and 2B possess one common layer of material 4 of which according to the direction of flow D, similarly to figure 1, the porousity fineness increases steadily. The series connection is achieved by using components, respectively 3C and 3D, of a different size, eventually consisting of two different materials, which will immobilize in two zones connected in series 8A and 8B by their penetration in the layer of material 4. For instance in this way an immobilization of two catalysts in a fluid flow 1 can be provided for in a catalysis, without their being in contact with each other.

In figure 6 another device according to the invention is shown where it is equipped with a transverse circuit which at the opposite side is connected with the layer of material 6, which forms a carrier for components 3. By providing for a transverse flow 12 in the transverse circuit the components 3 move in a transverse direction with regard to fluid flow 1 through the layer of material 6 to move further through circuit 11. By means of this device during a catalysis for instance the catalyst, consisting of components 3, can be regenerated by means of adequate means 13 via the transverse circuit 11. The fluid flow 1 can be interrupted temporarily or not in this way. To avoid that components 3 would escape from unit 2 in a contrary direction to the fluid flow 1 due to transverse flow 12 this unit can be covered with a layer of material 14 with such a porousity that it become impermeable for solid components 3 at inlet side 5.

It is clear that applying the aforementioned devices can occur in different ways. For instance, in this case the fluid can only be directed once through unit, respectively units, 2, but as shown by arrow 15 in figure 6, the fluid can, depending on the type of reaction, be directed repeatedly through the same unit 2.

In accordance with a special embodiment of the invention the device is constructed in such way that it not only provides for the immobilization of components in a fluid flow, but that it also is suitable to provide for a permeate, or in other words an evacuating product, which is sterilized. According to the invention this is achieved by equipping unit 2 with at least one layer or area of which the porousity is of such fineness that micro-organisms are being immobilized in unit 2. Such a porousity to guarantee a sterilization effect can be achieved by the use of siliciumcarbide.

If the device is intended for use in a sterile environment, the different layers 4, 6, 7, 10 and 14 will be made of materials which on the one hand possess the required permeability and on the other hand are physically and/or chemically sterilizable. In this application as well the aforementioned ceramic materials are especially qualified because they are heat resistant and create as such no problems during a sterilization by heat.

According to yet another special embodiment the components' carrier 3, in other words respectively for the layers of material 4 and 6 in the examples, a slight permeable material, permeable for the fluid and penetrable for components 3, will be used. Such slight permeable material indeed offers the possibility to immobilize plant cells in a fluid flow, where these can remain photosynthetically active or alive providing the necessary nutriments in the fluid flow and light supply through the material are available. The device can in this way be used for catalysis where plant cells are being used as catalysts or as co-immobilization agents. The transparent layer of material can consist of porous siliciumoxide, or in other words glass.

In conclusion it has to be noted that, in case the invention is used for immobilizing a catalyst in a fluid flow, the distribution of catalyst is being achieved automatically and that when a local impermeability arises, as a result of the modification of the fluid flow profile resulting thereof, an optimization of the operation is achieved automatically by the rearrangement of the catalyst particles or components 3. The invention also has the advantage that the obtained device or reactor is of the non-bleeding principle, in other words that the particles which release themselves from components 3 do not finish up in the permeate, but rearrange themselves simply in another location in unit 2.

The device according to the invention also presents a reactor for catalyst reactions with many possibilities. The mode of operation and the device not only allow for the simple charging with one or more catalysts, where the previously used catalysts can easily be removed by means of a so-called back-wash, where components 3 -by providing for a reversed fluid flow 1- simply can be flushed out of their carrier, thus the respective layers of material 4 or 6. According to yet another possibility components 3 can systematically be added to fluid flow 1 each time the previous components 3 have exhausted their reaction, such until the concerned material layer, respectively 4 or 6, are saturated with components 3.

It is clear that immobilizing components 3 also can be a consequence of an organism inoculation.

In order to clarify the wide application area of the invention some practical applications are described hereafter, solely as examples without any restrictive character.

Example 1 - Chemistry :

Hydrogenation of glycose with nickel-aluminium particles as a catalyst.

Example 2 - Biochemistry :

Wort fermentation by Saccharomyces Cerevisiae.

Example 3 - Environmental technology :

Anaerobe or aerobe water purification.

Example 4 - Mining technology :

Metal captation from ores with assistance of immobilized micro organisms.

This invention is in no way restricted to the embodiments described in the examples and represented in the drawings, but such ways for components immobilization in a fluid flow during chemical processes, as well as the constructions that apply this invention, can be executed in accordance with different variants without going beyond the scope of the invention.

**Claims**

1.- Mode of operation to immobilize components in a fluid flow during chemical processes, characterized in that it consists of providing a unit (2), in the fluid flow (1), of porous and/or permeable material, of which the degree of fineness of porosity and/or of its structure increases in accordance with the direction of flow, and to allow penetration of solid components (3) into the unit (2) where the relationship between material porosity and/or permeability of the aforementioned unit (2) and the magnitude of the components (3) is chosen in such way that latter immobilize due to the increasing degree of fineness of porosity and/or of the structure in the unit (2).

2. A device which applies the mode of operation in accordance with claim 1, characterized in that by placing at least one unit (2), in the fluid flow, of porous and/or permeable material, of which the degree of fineness of porosity and/or of its structure increases in accordance with the direction of flow, and in the unit (2) immobilized components (3), where the mutual relationship between the fineness of aforementioned material porosity and/or structure and the magnitude of the components (3) is such that components (3) due to the increasing degree of fineness of the material of unit (2) are immobilized in latter.

3.- A device in accordance with claim 2, characterized in that aforementioned unit (2) consists of a porous layer of material operating as a membrane (4), where the material in direction of flow shows a porousity gradient where the porousity degree of fineness gradually increases.

4.- A device in accordance with claim 2, characterized in that unit (2) consists of the combination of two porous layers of material (6,7) completely connecting with each other as a physical entity and operating as a membrane ; where the relationship between the porosity of these layer (6,7) and the magnitude of the components (3) allows for the penetration of components (3) into the first layer (6), while the second layer (7) definitely blocks components (3) thanks to its finer porosity.

5.- A device in accordance with on of the claims 3 or 4, characterized in that the layer of material (4,6) which contains components (3) consists of silicium carbide.

6.- A device in accordance with claim 3 or 4, characterized in that the layer of material (4,6) which contains components (3) consists of boron carbide.

7.- A device in accordance with claim 3 or 4, characterized in that the layer of material (4,6) which contains components (3) consists of an aluminium silicate.

8.- A device in accordance with claim 4, characterized in that the layer of material (7) which forms one physical entity with the permeable layer of material (6) for components (3) consists of aluminium oxide.

9.- A device in accordance with claim 3 or 4, characterized in that the layer of material (4,6) which contains components (3) is transparent.

10.- A device in accordance with claim 9, characterized in that the aforementioned layer of material (4,6) consists of porous silicium oxide.

11.- A device in accordance with one of the aforementioned claims, characterized in that it is equipped with a supporting layer (10) being applied to the outlet side of the unit (2).

12.- A device in accordance with claim 11, characterized in that the supporting layer (10) consists of silicium carbide.

13.- A device in accordance with one of claims 2 to 12 included, characterized in that it consists of a series connection of more aforementioned units (2).

14.- A device in accordance with one of claims 2 to 13 included, characterized in that components (3) consist of a catalyst, and/or a heterogenous reaction component.

15.- A device in accordance with claim 14, characterized in that aforementioned unit (2) is provided with a transverse circuit (11) for a transverse flow (12) of components (3) and circulation around this transverse circuit (11).

16.- A device in accordance with claim 15, characterized in that the transverse circuit (11) is equipped with means (13) to regenerate components (3).

17.-A device in accordance with claim 16, characterized in that the unit (2) contains as well at inlet as outlet side a layer of material (7,14) with a porosity which makes these layers impermeable for components (3), in such way that latter are encased.

18.- A device in accordance with claim 2 to 17 included, characterized in that unit (2) is equipped with at least one section with a porosity which provides for a sterilization effect of the fluid flow (1).

**Patentansprüche**

1. Verfahren zur Immobilisierung von Komponenten in einem Flüssigkeitsstrom bei chemischen Prozessen mit folgenden Kennzeichen: Das Verfahren besteht darin, in einem Flüssigkeitsstrom (1) ein Teil (2) aus porösem und/oder permeablem Material anzubringen, bei dem der Feinheitsgrad der Poren und/oder der Struktur in Strömungsrichtung zunimmt, und in diesen Teil (2) feste Komponenten (3) eindringen zu lassen, wobei das Verhältnis zwischen der Porosität des Materials und/oder der Permeabilität des erwähnten Teils (2) und der Größe der Komponenten (3) so gewählt ist, daß letztere durch den zunehmenden Feinheitsgrad der Poren und/oder der Struktur in Teil (2) unbeweglich werden.

2. Eine Vorrichtung, die das Verfahren gemäß Anspruch 1 verwendet und dadurch gekennzeichnet ist, daß in den Flüssigkeitsstrom mindestens ein Teil (2) aus porösem und/oder permeablem Material gebracht wird, bei dem der Feinheitsgrad der Poren und/oder der Struktur in Strömungsrichtung zunimmt, und in Teil (2) unbewegliche Komponenten (3) eingebracht werden, wobei die gegenseitige Beziehung zwischen der Feinheit der erwähnten Materialporen und/oder der Struktur und der Größe der Komponenten (3) so beschaffen ist, daß die Komponenten (3) aufgrund der zunehmenden Materialfeinheit des Teils (2) in letzterem unbeweglich werden.

3. Eine Vorrichtung gemäß Anspruch 2, die dadurch gekennzeichnet ist, daß das erwähnte Teil (2) aus einer porösen Materialschicht besteht, die als Membran (4) fungiert, wobei das Material in Strömungsrichtung einen Porositätsgradienten aufweist, d.h. der Feinheitsgrad der Poren allmählich zunimmt.

4. Eine Vorrichtung gemäß Anspruch 2, die dadurch gekennzeichnet ist, daß Teil (2) aus einer Kombination von zwei porösen Materialschichten (6, 7) besteht, die so miteinander verbunden sind, daß sie eine Einheit bilden, und die als Membran fungieren; dabei ermöglicht die Beziehung zwischen der Porosität dieser Schichten (6, 7) und der Größe der Komponenten (3) das Eindringen der Komponenten (3) in die erste Schicht (6), während die zweite Schicht (7) die Komponenten (3) dank ihrer feineren Poren endgültig aufhält.

5. Eine Vorrichtung gemäß Anspruch 3 oder 4, die dadurch gekennzeichnet ist, daß die Materialschicht (4, 6), die die Komponenten (3) enthält, Siliciumcarbid besteht.

6. Eine Vorrichtung gemäß Anspruch 3 oder 4, die dadurch gekennzeichnet ist, daß die Materialschicht (4, 6), die die Komponenten (3) enthält, aus Borcarbid besteht.

7. Eine Vorrichtung gemäß Anspruch 3 oder 4, die dadurch gekennzeichnet ist, daß die Materialschicht (4, 6), die die Komponenten (3) enthält, aus Aluminiumsilikat besteht.

8. Eine Vorrichtung gemäß Anspruch 4, die dadurch gekennzeichnet ist, daß die Materialschicht (7), die mit der permeablen Materialschicht (6) eine Einheit für die Komponenten (3) bildet, aus Aluminiumoxid besteht.

9. Eine Vorrichtung gemäß Anspruch 3 oder 4, die dadurch gekennzeichnet ist, daß die Materialschicht (4, 6), die die Komponenten (3) enthält, transparent ist.

10. Eine Vorrichtung gemäß Anspruch 9, die dadurch gekennzeichnet ist, daß die erwähnte Materialschicht (4, 6), aus porösem Siliciumoxid besteht.

11. Eine Vorrichtung gemäß einem der erwähnten Ansprüche, die dadurch gekennzeichnet ist, daß sie mit einer Trägerschicht (10) ausgerüstet ist, die an der Ausgangsseite des Teils (2) angebracht ist.

12. Eine Vorrichtung gemäß Anspruch 11, die dadurch gekennzeichnet ist, daß die Trägerschicht (10) aus Siliciumcarbid besteht.

13. Eine Vorrichtung gemäß einer der Ansprüche 2 bis einschließlich 12, die dadurch gekennzeichnet ist, daß sie aus mehreren in Reihe geschalteten Teilen (2) besteht.

14. Eine Vorrichtung gemäß einer der Ansprüche 2 bis einschließlich 13, die dadurch gekennzeichnet ist, daß die Komponenten (3) aus einem Katalysator und/oder den Komponenten einer heterogenen Reaktion bestehen.

15. Eine Vorrichtung gemäß Anspruch 14, die dadurch gekennzeichnet ist, daß das erwähnte Teil (2) einen Transversalkreis (11) für eine Transversalströmung (12) der Komponenten (3) besitzt und eine Zirkulation durch diesen Transversalkreis (11) stattfindet.

16. Eine Vorrichtung gemäß Anspruch 15, die dadurch gekennzeichnet ist, daß der Transversalkreis (11) mit Hilfsmitteln (13) zur Regenerierung der Komponenten (3) ausgestattet ist.

17. Eine Vorrichtung gemäß Anspruch 16, die dadurch gekennzeichnet ist, daß Teil (2) sowohl an der Eingangs- wie der Ausgangsseite eine Materialschicht (7, 14) enthält, wobei diese Schichten aufgrund ihrer Porosität für die Komponenten (3) undurchlässig sind, so daß letztere eingeschlossen bleiben.

18. Eine Vorrichtung gemäß Anspruch 2 bis einschließlich 17, die dadurch gekennzeichnet ist, daß Teil (2) mit mindestens einem Bereich ausgestattet ist, der aufgrund seiner Porosität eine sterilisierende Auswirkung auf den Flüssigkeitsstrom hat.

**Revendications**

1. Procédure d'immobilisation d'éléments dans un flux de fluide au cours de processus chimiques, caractérisée en ce qu'elle consiste à prévoir dans le flux de fluide (1) une unité (2) en matériau poreux et/ou perméable dont le degré de finesse de la porosité et/ou de la structure augmente dans le sens du flux pour permettre la pénétration d'éléments solides (3) dans l'unité (2), où le rapport entre la porosité du matériau et/ou la perméabilité de l'unité susmentionnée (2) et la taille des éléments (3) est choisi de façon à immobiliser ces derniers à cause du degré croissant de finesse de la porosité et/ou de la structure dans l'unité (2).

2. Dispositif qui applique la procédure selon la revendication 1, caractérisé en ce qu'en plaçant dans le flux de fluide au moins une unité (2) en matériau poreux et/ou perméable dont le degré de finesse de la porosité et/ou de la structure augmente dans le sens du flux, les éléments (3) sont immobilisés dans l'unité (2), où le rapport mutuel entre la finesse de la porosité du matériau susmentionné et/ou de sa structure et la taille des éléments (3) est tel que les éléments (3) sont immobilisés dans l'unité (2) à cause du degré croissant de finesse de matériau de celle-ci.

3. Dispositif selon la revendication 2, caractérisé en ce que l'unité susmentionnée (2) se compose d'une couche poreuse de matériau agissant comme une membrane (4), où le matériau présente dans le sens du flux un gradient de porosité par lequel le degré de finesse de la porosité augmente progressivement.

4. Dispositif selon la revendication 2, caractérisé en ce que l'unité (2) se compose de deux couches poreuses de matériau combinées (6, 7), complètement réunies en une seule entité physique et agissant comme une membrane, où le rapport entre la porosité de ces couches (6, 7) et la taille des éléments (3) permet la pénétration des éléments (3) dans la première couche (6) tandis que la deuxième couche (7) bloque définitivement les éléments (3) grâce à sa porosité plus fine.

5. Dispositif selon une des revendications 3 ou 4, caractérisé en ce que la couche de matériau (4, 6) qui contient les éléments (3) se compose de carbure de silicium.

6. Dispositif selon une des revendications 3 ou 4, caractérisé en ce que la couche de matériau (4, 6) qui contient les éléments (3) se compose de carbure de bore.

7. Dispositif selon une des revendications 3 ou 4, caractérisé en ce que la couche de matériau (4, 6) qui contient les éléments (3) se compose de silicate d'aluminium.

8. Dispositif selon la revendication 4, caractérisé en ce que la couche de matériau (7) qui forme une entité physique avec la couche de matériau (6) perméable aux éléments (3) se compose d'oxyde d'aluminium.

9. Dispositif selon une des revendications 3 ou 4, caractérisé en ce que la couche de matériau (4, 6) qui contient les éléments (3) est transparente.

10. Dispositif selon la revendication 9, caractérisé en ce que la couche susmentionnée de matériau (4, 6) se compose d'oxyde de silicium poreux.

11. Dispositif selon une des revendications précédentes, caractérisé en ce qu'il est équipé d'une couche de support (10) à appliquer du côté sortie de l'unité (2).

12. Dispositif selon la revendication 11, caractérisé en ce que la couche de support (10) se compose de carbure de silicium.

13. Dispositif selon une des revendications 2 à 12 inclue, caractérisé en ce qu'il se compose d'un raccordement en série de plusieurs unités susmentionnées (2).

14. Dispositif selon une des revendications 2 à 13 inclue, caractérisé en ce que les éléments (3) se composent d'un catalyseur et/ou d'un élément de réaction hétérogène.

15. Dispositif selon la revendication 14, caractérisé en ce que l'unité susmentionnée (2) est munie d'un circuit transversal (11) permettant le flux transversal (12) des éléments (3) et d'une circulation autour de ce circuit transversal (11).

16. Dispositif selon la revendication 15, caractérisé en ce que le circuit transversal (11) est équipé d'un dispositif (13) de régénération des éléments (3).

17. Dispositif selon la revendication 16, caractérisé en ce que l'unité (2) comporte côté entrée et côté sortie une couche de matériau (7, 14) d'une porosité qui la rend imperméable aux éléments (3), de sorte que ces derniers sont emprisonnés.

18. Dispositif selon une des revendications 2 à 17 inclue, caractérisé en ce que l'unité (2) est équipée d'au moins une section d'une porosité telle qu'elle possède un effet de stérilisation sur le flux de fluide (1).

# Fig.1

# Fig.2

# Fig.3

EP 0 304 105 B1

Fig.4

Fig.5

Fig.6